(19) Europäisches Patentamt

European Patent Office

Office européen des brevets

(11) **EP 1 440 793 A1**

(12) **EUROPÄISCHE PATENTANMELDUNG**

(43) Veröffentlichungstag:
**28.07.2004 Patentblatt 2004/31**

(51) Int Cl.$^7$: **B32B 27/34**

(21) Anmeldenummer: **04000703.1**

(22) Anmeldetag: **15.01.2004**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **21.01.2003 DE 10302033**

(71) Anmelder: **Mitsubishi Polyester Film GmbH
65203 Wiesbaden (DE)**

(72) Erfinder:
• **Konrad, Matthias, Dr.
65719 Hofheim (DE)**

• **Peiffer, Herbert, Dr., Professor
55126 Mainz (DE)**
• **Hilkert, Gottfried, Dr.
55291 Saulheim (DE)**

(74) Vertreter: **Schweitzer, Klaus, Dr. et al
Patentanwaltskanzlei Zounek,
Industriepark Kalle-Albert,
Gebäude H391
Rheingaustrasse 190-196
65174 Wiesbaden (DE)**

(54) **Polyesterfolie mit verbesserter Sauerstoffbarriere und Poly(m-xylol-adipinamid)-haltiger Deckschicht, Verfahren zu ihrer Herstellung und ihre Verwendung**

(57) Biaxial orientierte Polyesterfolien, die eine polyesterhaltige Basisschicht (B) und mindestens eine Deckschicht (A) aufweisen, die Poly(m-xylol-adipinamid) (MXD6) enthält, zeichnen sich durch verbesserte optische Eigenschaften wie erhöhten Glanz und durch sehr gute Barriereeigenschaften, insbesondere gegenüber Sauerstoffdurchtritt, aus und sind daher als Verpackungsmaterialien für Nahrungs- und Genussmittel geeignet.

EP 1 440 793 A1

**Beschreibung**

Die Erfindung betrifft eine mehrschichtige, transparente, biaxial orientierte Polyesterfolie mit einer Basisschicht (B) und mindestens einer auf dieser Basisschicht (B) aufgebrachten Deckschicht (A). Die Deckschicht (A) enthält neben Polyester als zusätzliches Polymer Poly(m-xylol-adipinamid) (MXD6). Die Erfindung betrifft weiterhin ein Verfahren zur Herstellung der Folie und ihre Verwendung.

Transparente, biaxial orientierte Polyesterfolien, die sich durch verbesserte Barriereeigenschaften auszeichnen, sind nach dem Stand der Technik bekannt. In den meisten Fällen erhalten die Folien ihre verbesserten Barriereeigenschaften off line nach der Herstellung durch einen weiteren Verarbeitungsschritt. Beispiele hierfür sind die Extrusionsbeschichtung, die Beschichtung oder Laminierung mit Barrierematerialien, die Beschichtung im Vakuum mit Metallen oder mit keramischen Substanzen oder die Plasmapolymerisation in Verbindung mit der Vakuumbeschichtung.

Eine Ausnahme hiervon bildet das in der WO 99/62694 näher beschriebene Verfahren, bei dem eine mehrschichtige, koextrudierte Polyesterfolie, die mindestens eine Schicht aus EVOH (Ethylen-Vinyl-Alkohol) enthält, simultan biaxial verstreckt wird. Die Folie zeichnet sich durch gute mechanische Eigenschaften, insbesondere aber durch gute Barriereeigenschaften gegen den Durchtritt von Sauerstoff aus. Als bester Wert für die erzielbare Sauerstoffdurchlässigkeit OTR (engl. Oxygen Transmission Rate) werden in der Schrift 5 cm$^3$/(m$^2$ · bar · d) angegeben. Nachteilig an dem Verfahren ist, dass das bei der Herstellung anfallende Regenerat dem Prozess nicht wieder zugeführt werden kann, ohne dass die Folie ihre guten optischen Eigenschaften verliert.

Eine weitere Ausnahme bildet die in der JP 2001-347592 beschriebene biaxial orientierte Folie, die aus einer Mischung von Polyethylenterephthalat und Poly(m-xyloladipinamid) (MXD6) besteht. Der Anteil von Poly(m-xylol-adipinamid) (MXD6) in der Folie liegt zwischen 10 und 40 Gew.-% und der entsprechende Anteil von Polyethylenterephthalat zwischen 60 und 90 Gew.-%. Die Folie ist simultan biaxial verstreckt. Sie zeichnet sich durch gute mechanische Eigenschaften, durch eine hohe thermische Stabilität, insbesondere aber durch eine gute Barriere hinsichtlich der Permeation von Sauerstoff aus. Mit der Folie wird eine Sauerstoffdurchlässigkeit OTR erzielt, die kleiner als 30 cm$^3$/(m$^2$ · bar · d) ist. Außerdem zeichnet sich die Folie durch eine niedrige Trübung aus. In der Schrift wird für die Trübung ein Wert angegeben, der unterhalb von 15% liegt. Nachteilig an der Folie sind ihre beiden rauen Oberflächen, die durch die Mischungsunverträglichkeit der beiden Rohstoffe Polyethylenterephthalat und Poly(m-xylol-adipinamid) entstehen. Durch die hohen Rauigkeitswerte verliert die Folie ihren ursprünglichen hohen Glanz und erhält ein mattes Aussehen, was für viele Anwendungen in der Verpackungsindustrie unerwünscht ist. Von weiterem Nachteil an der Folie ist, dass sie nicht so gut bedruckbar, metallisierbar oder zu beschichten ist wie Folien, die z.B. nur aus Polyethylenterephthalat bestehen. Bedingt durch die hohe Rauigkeit der beiden Folienoberflächen ist die Dickenverteilung von zusätzlich aufgebrachten Schichten (Druckfarben, Metalle, Lack, keramische Materialien) unzureichend. Hierdurch verschlechtern sich die physikalischen Eigenschaften dieser Schichten ebenfalls.

Aufgabe der vorliegenden Erfindung war es, eine biaxial orientierte Polyesterfolie zur Verfügung zu stellen, die sich durch sehr gute Barriereeigenschaften auszeichnet, insbesondere gegenüber dem Durchtritt von Sauerstoff. Sie sollte die Nachteile der Folien nach dem Stand der Technik nicht mehr aufweisen und sich insbesondere dadurch auszeichnen, dass

- zumindest eine der beiden Folienoberflächen Rauigkeitswerte aufweist, die so niedrig sind, dass die Folie z.B. gut bedruckbar, gut metallisierbar bzw. gut zu beschichten ist, ohne dass diese zusätzliche Funktionsschicht in ihrer Wirkung beeinträchtigt wird;
- zumindest eine der beiden Folienoberflächen einen entsprechend hohen Glanz aufweist, so dass die Folie ohne nennenswerte Einschränkungen für die Verpackungsanwendung eingesetzt werden kann;
- sich die Folie wirtschaftlich herstellen lässt, dies bedeutet beispielsweise auch, dass zur Herstellung der Folie in der Industrie übliche Streckverfahren eingesetzt werden können, ohne sich dabei auf das teure simultane Streckverfahren einschränken zu müssen;
- eine gute Haftung zwischen den einzelnen Schichten der Folie für deren praktische Anwendung gewährleistet sein muss;
- bei der Herstellung der Folie gewährleistet ist, dass das Regenerat in einer Menge von bis zu 60 Gew.-% wieder der Extrusion zugeführt werden kann, ohne dass dabei die physikalischen und optischen Eigenschaften der Folie, insbesondere aber die Barriere gegenüber Sauerstoff, nennenswert negativ beeinflusst werden.

Andererseits sollten sich gleichzeitig die anderen, Polyesterfolien auszeichnenden Eigenschaften nicht verschlechtern. Hierzu gehören beispielsweise die mechanischen und die thermischen Eigenschaften, das Wickelverhalten und die Verarbeitbarkeit der Folie, insbesondere bei der Bedruckung, Kaschierung oder der Beschichtung mit metallischen oder keramischen Materialien.

Gelöst wird die Aufgabe durch eine biaxial orientierte Polyesterfolie, die eine Basisschicht (B) und mindestens eine Deckschicht (A) aufweist, dadurch gekennzeichnet, dass die Deckschicht (A) Poly (m-xylol-adipinamid) (MXD6) enthält.

Die Basisschicht (B) enthält thermoplastischen Polyester, bevorzugt zu mindestens 60 Gew.-%, bezogen auf das Gewicht der Schicht (B). Die Deckschicht (A) enthält Poly(m-xylol-adipinamid) bevorzugt zu 5 bis 100 Gew.-%, bezogen auf das Gewicht der Schicht (A). In einer bevorzugten Ausführungsform enthält auch die Basisschicht (B) Poly(m-xylol-adipinamid), bevorzugt zu 0 bis 30 Gew.-%.

Poly(m-xylol-adipinamid) (MXD6), auch als Poly-m-Xylylen-adipinamid oder PA-MXD6 bezeichnet, ist ein Polykondensationsprodukt (Polyarylamid) aus m-Xylylendiamin und Adipinsäure und wird in verschiedenen Typen auf dem Markt angeboten, die grundsätzlich alle für den erfindungsgemäßen Zweck geeignet sind. Bevorzugt werden Typen mit einer Schmelzviskosität von kleiner als 2000 Poise.

Die mehrschichtige, biaxial orientierte, transparente Polyesterfolie nach der vorliegenden Erfindung weist gegenüber Folien nach dem Stand der Technik verbesserte optische Eigenschaften, insbesondere einen erhöhten Glanz auf (zumindest auf einer Folienoberfläche). Darüber hinaus zeichnet sich die Folie durch sehr gute Barriereeigenschaften, insbesondere gegenüber dem Durchtritt von Sauerstoff, aus. Dabei ist eine Mindesthaftung zwischen den einzelnen Schichten der Folie von größer als 0,5 N/25 mm gewährleistet.

Die Folie besitzt eine Sauerstoffbarriere von bevorzugt kleiner als 50 $cm^3 \cdot m^{-2} \cdot d^{-1} \cdot bar^{-1}$, vorzugsweise kleiner als 40 $cm^3 \cdot m^{-2} \cdot d^{-1} \cdot bar^{-1}$ und besonders bevorzugt kleiner als 30 $cm^3 \cdot m^{-2} \cdot d^{-1} \cdot bar^{-1} \cdot$

Die Folie nach der vorliegenden Erfindung besteht zumindest aus der erfindungsgemäßen Basisschicht (B) und der erfindungsgemäßen Deckschicht (A). In diesem Fall ist die Folie zweischichtig aufgebaut. In einer bevorzugten Ausführungsform ist die Folie drei- oder mehr als dreischichtig aufgebaut. Sie besteht dann aus der erfindungsgemäßen Basisschicht (B), den beiden erfindungsgemäßen Deckschichten (A) und (C) und gegebenenfalls weiteren Zwischenschichten (D, E, F, ...). Die Deckschichten (A) und (C) sowie die Zwischenschichten können gleich oder verschieden sein.

Die Basisschicht der Folie besteht bevorzugt zu mindestens 60 Gew.-% aus thermoplastischem Polyester (= Komponente I), bezogen auf das Gesamtgewicht dieser Schicht. Dafür geeignet sind z. B. Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Polyester, die zu mindestens 90 Mol-%, besonders bevorzugt zu mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen Diolen bzw. anderen Dicarbonsäuren. In vorteilhafter Weise können für die Komponente I der Basisschicht (B) auch Copolymere oder Mischungen oder Blends aus den genannten Homo- und/oder Copolymeren verwendet werden.

Besonders vorteilhaft ist es für den zuletzt genannten Fall, wenn in der Basisschicht (B) als Komponente I ein Polyester-Copolymer auf Basis von Isophthalsäure und Terephthalsäure oder auf Basis von Terephthalsäure und Naphthalin-2,6-dicarbonsäure verwendet wird. In diesem Fall ist die Herstellbarkeit der Folie gut und die optischen Eigenschaften der Folie sowie die erzielten Barriereeigenschaften der Folie besonders gut.

In diesem Fall enthält die Basisschicht (B) im Wesentlichen als Komponente I ein Polyestercopolymeres, das überwiegend aus Isophthalsäure- und Terephthalsäure-Einheiten und/oder Terephthalsäure- und Naphthalin-2,6-dicarbonsäure-Einheiten und aus Ethylenglykol-Einheiten zusammengesetzt ist und als Komponente II das zuvor genannte erfindungsgemäße Poly(m-xylol-adipinamid) (MXD6).

Die bevorzugten Copolyester, die die gewünschten Eigenschaften der Folie bereitstellen (insbesondere die Optik, gemeinsame Verstreckbarkeit), sind solche, die aus Terephthalat- und Isophthalat-Einheiten und aus Ethylenglykol-Einheiten aufgebaut sind. Der Anteil an Ethylenterephthalat in diesen Copolymeren beträgt bevorzugt 40 bis 97 Mol-% und der entsprechende Anteil an Ethylenisophthalat 60 bis 3 Mol-%. Bevorzugt sind Copolyester, bei denen der Anteil an Ethylenterephthalat 50 bis 95 Mol-% und der entsprechende Anteil an Ethylenisophthalat 50 bis 5 Mol-% beträgt, und ganz bevorzugt sind Copolyester, bei denen der Anteil an Ethylenterephthalat 60 bis 90 Mol-% und der entsprechende Anteil an Ethylenisophthalat 40 bis 10 Mol-% beträgt.

Geeignete andere aliphatische Diole, die Bestandteile der erfindungsgemäßen Polyester sein können, sind beispielsweise Diethylenglykol, Triethylenglykol, aliphatische Glykole der allgemeinen Formel HO-$(CH_2)_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel HO-$C_6H_4$ X-$C_6H_4$-OH, wobei X für -$CH_2$-, -$C(CH_3)_2$-, -$C(CF_3)_2$-, - O-, -S- oder -$SO_2$- steht. Daneben sind auch Bisphenole der Formel HO-$C_6H_4$-$C_6H_4$-OH gut geeignet.

Geeignete andere aromatische Dicarbonsäuren, die Bestandteile der erfindungsgemäßen Polyester sein können, sind bevorzugt Benzoldicarbonsäuren, Naphthalindicarbonsäuren (beispielsweise Naphthalin-1,4- oder -1,6-dicarbonsäure), Biphenyl-x,x'dicarbonsäuren (insbesondere Biphenyl-4,4'-dicarbonsäure), Diphenylacetylen-x,x'-dicarbonsäuren (insbesondere Diphenylacetylen-4,4 '-dicarbonsäure) oder Stilben-x,x'dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$-Alkandisäuren besonders geeignet, wobei der Alkanteil geradkettig oder verzweigt sein kann.

Die Herstellung der Polyester kann nach dem bekannten Umesterungsverfahren erfolgen. Dabei geht man von Dicarbonsäureestern und Diolen aus, die mit den üblichen Umesterungskatalysatoren wie Zink-, Calcium-, Lithium- und Mangan-Salzen, umgesetzt werden. Die Zwischenprodukte werden dann in Gegenwart allgemein üblicher Polykondensationskatalysatoren wie Antimontrioxid oder Titan-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Bevorzugt enthält die Basisschicht (B) als eine weitere Komponente Poly(m-xyloladipinamid) (MXD6) (= Komponente II) in einer Menge von bevorzugt 0 bis 30 Gew.-%, insbesondere in einer Menge von 2 bis 25 Gew.-% und besonders bevorzugt in einer Menge von 5 bis 20 Gew.-%, bezogen auf das Gewicht der Basisschicht (B). Der Gewichtsanteil des Poly(m-xylol-adipinamid) (MXD6) in der Basisschicht (B) wird in erster Linie vom Anteil und der Zusammensetzung des eingesetzten Regenerats bestimmt, das bevorzugt der Basisschicht zugeführt wird. Je nach Anforderung an die Folie kann darüber hinaus der Basisschicht weiteres MXD6 zugegeben werden. Regenerat bedeutet bei der Folienherstellung anfallendes Verschnittmaterial, das dem Herstellungsprozess erneut zugeführt wird.

Für die Verarbeitung der Polymere hat es sich als günstig erwiesen, wenn das Poly(m-xylol-adipinamid) (MXD6) so ausgewählt wird, dass sich die Viskositäten der jeweiligen Polymerschmelzen nicht zu sehr unterscheiden. Im anderen Fall ist unter Umständen mit zusätzlichen Erhebungen/Vorsprüngen, mit Fließstörungen oder mit Streifenbildung auf der fertigen Folie zu rechnen. Außerdem neigen die Polymere dann zur Entmischung. Entsprechend den hier durchgeführten Experimenten sollte die Schmelzviskosität des Poly(m-xylol-adipinamid) (MXD6) bevorzugt unterhalb von bestimmten Werten liegen. Sehr gute Resultate im Sinne der vorliegenden Erfindung erhält man, wenn die Schmelzviskosität für das MXD6 kleiner als 2000 Poise (gemessen in einem Kapillarrheometer von 0,1 mm Durchmesser, einer Länge von 10 mm und einer Belastung von 10 kg/cm$^2$, Schmelztemperatur 280 °C), bevorzugt kleiner als 1800 Poise und besonders bevorzugt kleiner als 1600 Poise ist.

Das Poly(m-xylol-adipinamid) (MXD6) wird zweckmäßigerweise entweder als reines Granulat oder als granuliertes Konzentrat (Masterbatch) in die Folie eingearbeitet. Das Polyestergranulat wird dazu mit dem Poly(m-xylol-adipinamid) (MXD6) bzw. dem Poly(m-xylol-adipinamid) (MXD6)-Masterbatch vorgemischt und anschließend dem Extruder zugeführt. Im Extruder werden die Komponenten weiter vermischt und auf Verarbeitungstemperatur erwärmt. Dabei ist es für das erfindungsgemäße Verfahren zweckmäßig, wenn die Extrusionstemperatur oberhalb der Schmelztemperatur $T_s$ des Poly(m-xylol-adipinamid) (MXD6) liegt, im allgemeinen mindestens 5 °C, vorzugsweise 10 bis 50 °C, insbesondere aber 20 bis 40 °C, über der Schmelztemperatur des Poly(m-xylol-adipinamid) (MXD6). Als eine bevorzugte Extrusionseinheit für die Verarbeitung der Mischung bzw. auch für die Herstellung des Masterbatches aus den Komponenten I und II bietet sich der Zweischneckenextruder an.

Die Folie nach der vorliegenden Erfindung ist zumindestens zweischichtig aufgebaut. Sie besteht dann aus der erfindungsgemäßen Basisschicht (B) und der auf dieser angeordneten erfindungsgemäßen Deckschicht (A). Darüber hinaus kann die Folie zusätzliche Schichten enthalten, die mit Deckschichten oder mit Zwischenschichten bezeichnet werden. Typische Folienaufbauten sind dann ABA oder ABC, wobei A und C entsprechende Deckschichten darstellen, die gleich oder verschieden sein können.

Für die Deckschichten können prinzipiell die gleichen (Polyester-) Polymere verwendet werden wie für die Basisschicht B. Daneben können in den Deckschichten aber auch andere Materialien enthalten sein, wobei dann die Deckschichten bevorzugt aus einem Gemisch von Polymeren, Copolymeren oder Homopolymeren bestehen, welches Ethylen-isophthalat-Einheiten und/oder Ethylen-2,6-naphthalat-Einheiten und/oder Ethylen-terephthalat-Einheiten enthält. Bis zu 10 Mol-% der Polymere können aus weiteren Comonomeren bestehen.

In vorteilhafter Weise können für die Deckschichten als weitere Komponenten auch (Polyester-) Copolymere oder (Polyester-) Mischungen oder Blends aus Homound/oder Copolymeren verwendet werden.

Besonders zweckmäßig ist, wenn in den Deckschichten ein Polyester-Copolymer auf Basis von Isophthalsäure und Terephthalsäure verwendet wird. In diesem Fall sind die optischen Eigenschaften der Folie besonders gut.

In diesem Fall enthalten die Deckschichten oder eine Deckschicht der Folie im Wesentlichen ein Polyestercopolymeres, das überwiegend aus Isophthalsäure- und Terephthalsäure-Einheiten und aus Ethylenglykol-Einheiten zusammengesetzt ist. Die restlichen Monomereinheiten stammen aus anderen aliphatischen, cycloaliphatischen oder aromatischen Diolen bzw. anderen Dicarbonsäuren, wie sie auch in der Basisschicht vorkommen können. Die bevorzugten Copolyester, die die gewünschten Eigenschaften der Folie bereitstellen (insbesondere die Optik), sind solche, die aus Terephthalat- und Isophthalat-Einheiten und aus Ethylenglykol-Einheiten aufgebaut sind. Der Anteil an Ethylenterephthalat beträgt bevorzugt 40 bis 97 Mol-% und der entsprechende Anteil an Ethylenisophthalat 60 bis 3 Mol-%. Bevorzugt sind Copolyester, bei denen der Anteil an Ethylenterephthalat 50 bis 90 Mol-% und der entsprechende Anteil an Ethylenisophthalat 50 bis 10 Mol-% beträgt, und ganz bevorzugt sind Copolyester, bei denen der Anteil an Ethylenterephthalat 60 bis 85 Mol-% und der entsprechende Anteil an Ethylenisophthalat 40 bis 15 Mol-% beträgt.

Erfindungsgemäß enthält die Deckschicht (A) als eine Komponente Poly(m-xyloladipinamid) (MXD6) (= Komponente II) in einer Menge von bevorzugt 5 bis 100 Gew.-%, insbesondere in einer Menge von 7 bis 95 Gew.-% und besonders bevorzugt in einer Menge von 10 bis 90 Gew.-%, bezogen auf das Gewicht der Deckschicht (A). In einer bevorzugten Ausführungsform der Erfindung enthält die Deckschicht (A) einen höheren Anteil Poly(m-xylol-adipinamid) (MXD6) als die Basisschicht (B).

Die Dicke der Deckschichten ist bevorzugt größer als 1,0 µm und liegt bevorzugt im Bereich von 1,5 bis 20 µm und besonders bevorzugt im Bereich von 2,0 bis 10 µm.

Die Basisschicht (B) und die Deckschichten (A) und (C) und gegebenenfalls vorhandene Zwischenschichten können zusätzlich übliche Additive wie z. B. Stabilisatoren und Antiblockmittel enthalten. Sie werden zweckmäßig dem Polymer bzw. der Polymermischung bereits vor dem Aufschmelzen zugesetzt. Als Stabilisatoren werden beispielsweise Phosphorverbindungen wie Phosphorsäure oder Phosphorsäureester eingesetzt. Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polystyrol- oder Acrylat-Partikel.

Als Additive können auch Mischungen von zwei oder mehreren verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen z.B. als glykolische Dispersion während der Polykondensation oder über Masterbatche bei der Extrusion zugegeben werden. Als vorteilhaft haben sich Pigmentkonzentrationen von 0,0001 bis 5 Gew.-% erwiesen, bezogen auf das Gewicht der damit ausgerüsteten Schicht. Eine detaillierte Beschreibung der Antiblockmittel findet sich beispielsweise in der EP-A-0 602 964.

In einer bevorzugten Ausführungsform der Erfindung beträgt der Füllstoffanteil (Pigmentanteil) in der Deckschicht (A) weniger als 0,5 Gew.-%, bevorzugt weniger als 0,4 Gew.-% und besonders bevorzugt weniger als 0,3 Gew.-%, bezogen auf des Gewicht der Deckschicht (A).

In einer anderen, besonders bevorzugten Ausführungsform ist die Folie dreischichtig aufgebaut und weist dann die Basisschicht (B) und die beiden Deckschichten (A) und (C) auf. Die weitere Deckschicht (C) kann dabei genauso aufgebaut sein wie die Deckschicht (A).

In einer weiteren, besonders bevorzugten Ausführungsform enthält die Deckschicht (C) kein Poly(m-xylol-adipinamid) (MXD6), des Weiteren nicht mehr als 0,5 Gew.-% eines bestimmten Füllstoffes, z.B. $SiO_2$, und weist eine mittlere Rauigkeit $R_a$ auf, die bevorzugt im Bereich von 10 bis 100 nm liegt. Von Vorteil ist dabei, wenn der mittlere Durchmesser $d_{50}$ der eingesetzten Füllstoffe in einem Bereich von 2,0 bis 5,0 µm liegt. Diese Deckschicht (C) eignet sich dann ganz besonders für die Auftragung weiterer dünner Funktionsschichten, die in-line (bei der Herstellung der Folie) oder off-line (bei der Weiterverarbeitung der Folie) durch geeignete Verfahren (z.B. reverse gravure) aufgetragen werden können.

Zumindest eine Oberfläche der erfindungsgemäßen Folie weist bevorzugt eine mittlere Rauigkeit $R_a$ von 10 bis 100 nm auf.

Die Gesamtdicke der erfindungsgemäßen Polyesterfolie kann innerhalb weiter Grenzen variieren und richtet sich nach dem beabsichtigten Verwendungszweck. Sie beträgt in der Regel 6 bis 300 µm, vorzugsweise 8 bis 200 µm, besonders bevorzugt 10 bis 100 µm, wobei die Basisschicht (B) einen Anteil von vorzugsweise 40 bis 99% an der Gesamtdicke hat.

Gegenstand der vorliegenden Erfindung ist auch ein Verfahren zur Herstellung der Folie. Zur Herstellung der Basisschicht (B) werden zweckmäßigerweise die jeweiligen Komponenten (Komponente I = Polyesterhomo- oder Polyestercopolymeres oder Mischungen hiervon, Komponente II = Poly(m-xylol-adipinamid) (MXD6)-Granulat) direkt dem Extruder zugeführt. Die Materialien lassen sich bei etwa 270 bis 300 °C extrudieren. Aus verfahrenstechnischer Sicht (Durchmischung der verschiedenen Polymere) hat es sich dabei als besonders günstig erwiesen, wenn die Extrusion der Polymeren für die Basisschicht (B) auf einem Zweischneckenextruder mit Entgasungsmöglichkeit durchgeführt wird.

Die Polymere für die Deckschichten werden zweckmäßig über einen weiteren Extruder dem (Koextrusions-) System zugeführt; auch hier ist prinzipiell der Zweischneckenextruder dem Einschneckenextruder vorzuziehen. Die Schmelzen werden in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt. Danach wird diese Vorteile biaxial verstreckt und anschließend thermofixiert.

Die biaxiale Streckung wird im Allgemeinen sequentiell durchgeführt. Dabei wird vorzugsweise erst in Längsrichtung (d.h. in Maschinenrichtung) und anschließend in Querrichtung (d.h. senkrecht zur Maschinenrichtung) gestreckt. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen.

Die Temperatur, bei der die Streckung durchgeführt wird, kann in einem relativ großen Bereich variieren und richtet sich nach den gewünschten Eigenschaften der Folie. Im allgemeinen wird die Streckung in Längsrichtung in einem Temperaturbereich von 80 (Aufheiztemperaturen 80 bis 130 °C) bis 130 °C (Strecktemperaturen 80-130°C, abhängig vom Streckverhältnis) und die Querstreckung in einem Temperaturbereich von 90 (Beginn der Streckung) bis 140°C (Ende der Streckung) durchgeführt. Das Längsstreckverhältnis liegt bevorzugt im Bereich von 2,0:1 bis 5,0:1, insbesondere von 2,3:1 bis 4,8:1. Das Querstreckverhältnis liegt bevorzugt im Bereich von 2,5:1 bis 5,0:1, insbesondere von 2,7:1 bis 4,5:1.

Vor der Querstreckung kann man eine oder beide Oberflächen der Folie nach den bekannten Verfahren In-line beschichten. Die In-line-Beschichtung kann beispielsweise zu einer verbesserten Haftung einer Metallschicht oder einer eventuell aufgebrachten Druckfarbe, aber auch zur Verbesserung des antistatischen Verhaltens, des Verarbeitungsverhaltens, aber auch zur weiteren Verbesserung der Barriere führen wie z.B. durch Auftragung von Barrierebeschichtungen, die z.B. EVOH, PVOH oder dergleichen enthalten. Vorzugsweise werden solche Schichten dann auf die glattere (= weniger raue) Oberfläche der Folie aufgetragen.

Für die Herstellung einer Folie mit ganz besonders guten optischen Eigenschaften (= sehr niedrige Trübung) und mit einer guten Prozesssicherheit (= wenig Abrisse) hat es sich als günstig erwiesen, wenn die planare Orientierung $\Delta$p der Folie kleiner ist als $\Delta$p = 0,160, bevorzugt kleiner ist als $\Delta$p = 0,158 und ganz bevorzugt kleiner ist als $\Delta$p = 0,156. Einen wesentlichen Einfluss auf die planare Orientierung $\Delta$p der fertigen Folie haben die Verfahrensparameter in der Längsstreckung und in der Querstreckung. Zu den wichtigsten die planare Orientierung beeinflussenden Verfahrensparametern gehören die Streckverhältnisse in Längs- und in Querrichtung ($\lambda_{MD}$ und $\lambda_{TD}$) und die Strecktemperaturen in Längs- und in Querrichtung ($T_{MD}$ und $T_{TD}$). Erhält man beispielsweise mit einer Maschine eine planare Orientierung der hergestellten Folie von $\Delta$p = 0,165 mit dem Parametersatz $\lambda_{MD}$ = 4,6 und $\lambda_{TD}$ = 4,0 und $T_{MD}$ = 118 °C und $T_{TD}$ = 125 °C, so erhält man durch Erhöhung der Längsstrecktemperatur auf $T_{MD}$ = 125 °C oder durch Erhöhung der Querstrecktemperatur auf $T_{TD}$ = 135 °C oder durch Absenkung des Längstreckverhältnisses auf $\lambda_{MD}$ = 4,3 oder durch Absenkung des Querstreckverhältnisses auf $\lambda_{TD}$ = 3,7 eine planare Orientierung $\Delta$p, die im bevorzugten Bereich liegt. Die angegeben Temperaturen beziehen sich bei der Längsstreckung auf die jeweiligen Walzentemperaturen und bei der Querstreckung auf die Folientemperaturen, die mittels IR gemessen wurden.

Bei der nachfolgenden Thermofixierung wird die Folie über eine Zeitdauer von etwa 0,1 bis 10 s bei einer Temperatur von ca. 150 bis 250 °C gehalten. Anschließend wird die Folie in üblicher Weise aufgewickelt.

Der Glanz (Einstrahlwinkel = 20°) der Folienoberfläche (B) im Falle einer zweischichtigen Folie bzw. der Glanz der Folienoberfläche (C) bei einer dreischichtigen Folie ist bevorzugt größer als 100. In einer bevorzugten Ausführungsform beträgt der Glanz dieser Seiten mehr als 110 und in einer besonders bevorzugten Ausführungsform mehr als 120. Diese Folienoberflächen eignen sich daher insbesondere für eine weitere funktionelle Beschichtung, für die Bedruckung oder für die Metallisierung. Der hohe Glanz der Folie überträgt sich auf den Druck oder die aufgebrachte Metallschicht und verleiht somit der Folie das gewollte werbewirksame Aussehen.

Die Trübung der Folie ist bevorzugt kleiner als 20 %. In einer bevorzugten Ausführungsform beträgt die Trübung der Folie weniger als 15 % und in einer besonders bevorzugten Ausführungsform weniger als 10 %. Durch die geringe Trübung eignet sich die Folie insbesondere für die Verpackungsanwendung.

Ein weiterer Vorteil der Erfindung besteht darin, dass die Herstellungskosten der erfindungsgemäßen Folie nicht wesentlich über denen einer Folie aus Standardpolyesterrohstoffen liegen. Daneben ist bei der Herstellung der Folie gewährleistet, dass Verschnittmaterial, das bei der Folienherstellung im Betrieb immanent anfällt, als Regenerat in einer Menge von bis zu ca. 60 Gew.-%, bevorzugt 10 bis 50 Gew.-%, jeweils bezogen auf das Gesamtgewicht der Folie, wieder für die Folienherstellung verwendet werden kann, ohne dass dabei die physikalischen Eigenschaften der Folie nennenswert negativ beeinflusst werden.

Die erfindungsgemäße Folie eignet sich daneben hervorragend zum Metallisieren oder Vakuumbeschichten mit keramischen Substanzen. Sie zeichnet sich dann ganz besonders durch hervorragende Barriereeigenschaften, insbesondere gegenüber Sauerstoff, aus.

Die erfindungsgemäße Folie eignet sich daher insbesondere zum Verpacken von Nahrungs- und Genussmitteln. Die erfindungsgemäße Folie zeichnet sich durch hervorragende Barriereeigenschaften, insbesondere gegenüber Sauerstoff, aus.

Die nachstehende Tabelle (Tabelle 1) fasst die wichtigsten erfindungsgemäßen und bevorzugten Folieneigenschaften noch einmal zusammen, wobei "erfindungsgemäß" bereits als eine bevorzugte Ausführungsform zu verstehen ist.

Tabelle 1

| | Erfindungsgemäß | Bevorzugt | Besonders bevorzugt | Einheit | Messmethode |
|---|---|---|---|---|---|
| Basisschicht B | | | | | |
| Komponente I (= thermoplastischer Polyester) | 60 bis 100 | 65 bis 98 | 70 bis 95 | Gew.-% | |
| Komponente II (= Poly(m-xylol-adipinamid) (MXD6) | 0 bis 30 | 2 bis 25 | 5 bis 20 | Gew.-% | |
| Schmelzviskosiät des verwendeten Poly(m-xylol-adipinamid) (MXD6) | < 2000 | < 1800 | < 1600 | Poise | im Kapillarheometer, 280 °C |
| Deckschicht (A) | | | | | |
| Komponente I (= thermoplastischer Polyester) | 0 bis 95 | 5 bis 93 | 10 bis 90 | Gew.-% | |
| Komponente II (= Poly(m-xylol-adipinamid) (MXD6) | 5 bis 100 | 7 bis 95 | 10 bis 90 | Gew.-% | |
| Schmelzviskosiät des verwendeten Poly(m-xylol-adipinamid) | < 2000 | < 1800 | < 1600 | Poise | im Kapillarheometer, 280 °C |
| Glanz Oberfläche (B) oder (C) Einstrahlwinkel 20° | > 100 | > 110 | > 120 | - | DIN 67530 |
| Dicke der Deckschicht (A) | > 1,0 | > 1,5 | > 2,0 | µm | |
| Folieneigenschaften | | | | | |
| Permeationskoeffizient für Sauerstoff | < 50 | < 40 | < 30 | $cm^3$ [12 µm]($m^2 \cdot$ bar $\cdot$ d) | DIN 53 380, Teil 3 |
| OTR einer 12 µm dicken Folie | < 50 | < 40 | < 30 | $cm^3$/($m^2 \cdot$ bar $\cdot$ d) | DIN 53 380, Teil 3 |
| Haftung zwischen den Schichten | > 0,5 | > 1,0 | > 1,5 | N/25 mm | wie beschrieben |
| Planare Orientierung Δp | < 0,160 | < 0,158 | < 0,156 | | wie beschrieben |
| Trübung der Folie | < 20 | < 15 | < 10 | % | ASTM-D 1003-52 |
| Dicke der Folie | 6 bis 300 | 8 bis 200 | 10 bis 100 | µm | |

EP 1 440 793 A1

**Messmethoden**

Zur Charakterisierung der Rohstoffe und der Folien wurden die folgenden Methoden benutzt:

DIN = Deutsches Institut für Normung
ASTM = American Society for Testing and Materials

(1) Sauerstoffdurchlässigkeit (OTR = Oxygen Transmission Rate)

Die Messung der Sauerstoffbarriere erfolgte mit einem OXTRAN® 100 von Mocon Modern Controls (USA) entsprechend DIN 53 380, Teil 3 (23 °C, 50 % relative Luftfeuchtigkeit auf beiden Seiten der Folie). Die Messung der OTR erfolgte dabei jeweils an 12 μm dicker Folie.

(2) Trübung

Die Trübung der Folie wurde in Anlehnung an ASTM-D 1003-52 bestimmt.

(3) SV-Wert (standard viscosity)

Die Standardviskosität SV (DCE) wird, angelehnt an DIN 53726, in Dichloressigsäure gemessen. Die intrinsische Viskosität (IV) berechnet sich wie folgt aus der Standardviskosität

$$\text{IV (DCE)} = 6{,}907 \cdot 10^{-4} \text{ SV (DCE)} + 0{,}063096$$

(4) Glanz

Der Glanz wurde nach DIN 67530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

(5) Rauigkeit

Die Rauigkeit $R_a$ der Folie wurde nach DIN 4768 bei einem Cut-off von 0,25 mm bestimmt. Es wurde dabei nicht auf einer Glasplatte, sondern im Ring gemessen. Bei der Ringmethode wird die Folie in einen Ring eingespannt, so dass keine der beiden Oberflächen eine dritte Oberfläche (z.B. Glas) berührt.

(6) Planare Orientierung $\Delta p$

Die Bestimmung der planaren Orientierung erfolgt über die Messung der Brechungsindizes mit einem Abbe-Refraktometer (Kruss Optronic, Deutschland). Die planare Orientierung wird dabei stets an der höher glänzenden Seite der Folie gemessen. Die Bestimmung der Brechungsindizes ist bereits ausführlich z.B. in EP-A-0 952 176, Seite 10, wiedergegeben worden. Es wird daher hier ausdrücklich auf diese Schrift Bezug genommen. Die Orientierungswerte werden dann aus den Brechungsindizes nach den folgenden Formeln berechnet:

$$\Delta n = n_{MD} - n_{TD}$$

$$\Delta p = (n_{MD} + n_{TD})/2 - n_z$$

$$n_{av} = (n_{MD} + n_{TD} + n_z)/3$$

(7) Haftung zwischen den Schichten

Das Folienmuster (300 mm längs · 180 mm quer) gemäß der vorliegenden Erfindung wird vor dem Verkleben auf einen glatten Karton (200 mm längs · 180 mm quer; ca. 400 g/m$^2$, gebleicht, Außenlagen gestrichen) gelegt, die überstehenden Folienenden sind auf die Rückseite umzuschlagen und mit Klebeband zu fixieren.

Die Verklebung der Folie gemäß der vorliegenden Erfindung mit einer Standardpolyesterfolie von 12 μm Dicke (z.B. Melinex® 800) erfolgt mit einem Rakelgerät und Rakelstab Nr. 3 der Fa. Erichsen (Deutschland), wobei ca. 1,5 ml Klebstoff (Novacote® NC 275+CA 12; Mischverhältnis: 4/1 + 7 Teile Ethylacetat) auf die Deckschicht A der Folie gemäß der vorliegenden Erfindung aufgetragen werden. Nach dem Auslüften des Lösemittels wird die Standardpolyesterfolie mit einer Metallrolle (Breite 200 mm, Durchmesser 90 mm, Masse 10 kg, nach DIN EN 20 535) auf die Deckschicht A der erfindungsgemäßen Folie aufkaschiert. Die Parameter der Kaschierung sind:

| | |
|---|---|
| Klebstoffmenge | 5+/-1 g/m$^2$ |
| Lüften nach Auftrag des Klebers | 4 min +/- 15 s |
| Rakelstärke (Erichsen) | 3 |
| Geschwindigkeitsstufe des Rakels | ca. 133 mm/s |
| Aushärtzeit des Verbundes | 2 h bei 70 °C in einem Umluftofen |

Mit einem 25+/-1 mm-Streifenschneider werden ca. 100 mm lange Proben entnommen. Hierbei sind ca. 50 mm Verbund und 50 mm unverklebte Einzellagen zum Fixieren/Einspannen des Prüfkörpers notwendig. Die Prüflinge sind mittels doppelseitigem Klebeband mit der Rückseite der erfindungsgemäßen Folie (Basisschicht B oder Deckschicht C) vollflächig auf einem Trägerblech zu fixieren. Die Platte mit dem aufgeklebten Verbund ist in die untere Spannbacke der Zugprüfmaschine einzuspannen. Der Klemmabstand beträgt 100 mm. Das nicht kaschierte Ende der Standard-Polyesterfolie ist so in die obere Spannbacke der Zugprüfmaschine (z.B. Instron, Zwick) einzuspannen, dass sich ein Schälwinkel von 180° ergibt. Angegeben wird die mittlere Schälkraft in N/25 mm gerundet auf eine Stelle nach dem Komma.

| | |
|---|---|
| Probenbreite | 25 mm |
| Vorkraft: | 0,1 N |
| Messlänge: | 25 mm |
| Abzugsgeschwindigkeit bis Vorkraft: | 25 mm/min |
| Vorweg: | 5 mm |
| Prüfweg: | 40 mm |
| Empfindlichkeit: | 0,01 N |
| Abzugsgeschwindigkeit: | 100 mm/min |

Das Messergebnis für die Schälkraft ist gleichzusetzen mit der minimalen Haftkraft zwischen den Schichten, da die Haftkraft zwischen dem Kleber und der Standardfolie deutlich größer ist.

**Beispiele**

Die folgenden Beispiele illustrieren die Erfindung. Die verwendeten Produkte (Marken und Herstellerfirma) sind jeweils nur einmal angegeben und beziehen sich dann auch auf die nachfolgenden Beispiele.

Beispiel 1

Chips aus Polyethylenterephthalat (hergestellt über das Umesterungsverfahren mit Mn als Umesterungskatalysator, Mn-Konzentration in Polymer: 100 ppm; bei einer Temperatur von 150 °C auf eine Restfeuchte von unterhalb 100 ppm getrocknet) werden dem Extruder (Einschneckenextruder) für die Basisschicht (B) zugeführt. Ebenfalls wurden Chips aus Polyethylenterephthalat und Poly(m-xylol-adipinamid) (MXD6) in einem Mischungsverhältnis von 50: 50 dem Extruder (Zweischneckenextruder) für die Deckschicht (A) zugeführt. Dann wurde durch Koextrusion und anschließende stufenweise Orientierung in Längs- und in Querrichtung eine transparente, zweischichtige Folie mit AB-Aufbau und einer Gesamtdicke von 12 μm hergestellt. Die Dicke der Deckschicht (A) betrug 2,0 μm.

| Deckschicht (A): | |
| --- | --- |
| 50 Gew.-% | Polyethylenterephthalat 4023 der Fa. KoSa, Deutschland mit einem SV-Wert von 800 |
| 50 Gew.-% | Poly(m-xylol-adipinamid) (MXD6) der Fa. Mitsubishi Gas Chemical Co. (Japan), Produktname Nylon MXD6 6001, mit einer Schmelzviskosität von 1400 Poise |

| Basisschicht (B): | |
| --- | --- |
| 100 Gew.-% | Polyesterrohstoff mit einem SV-Wert von 800 bestehend aus 99,9 Gew.-% Polyethylenterephthalat 4023 der Fa. KoSa (Deutschland) und 0,1 Gew.-% Kieselsäurepartikel (Sylysia® 320 von der Fa. Fuji/Japan) mit einem $d_{50}$-Wert von 2,5 µm |

Die Herstellungsbedingungen in den einzelnen Verfahrensschritten waren:

| Extrusion | Temperaturen | A-Schicht: | 290 ° C |
| --- | --- | --- | --- |
| | | B-Schicht: | 290 °C |
| | Temperatur der Abzugswalze | | 25 °C |
| Längsstreckung: | Strecktemperatur: | | 125 °C |
| | Längsstreckverhältnis: | | 4,0 |
| Querstreckung: | Strecktemperatur: | | 130 °C |
| | Querstreckverhältnis | | 3,9 |
| Fixierung: | Temperatur: | | 230 °C |
| | Dauer: | | 3 s |

Die Oberfläche der Basisschicht (B) hatte den geforderten hohen Glanz, die Folie die geforderte niedrige Trübung und die geforderte niedrige OTR. Weiterhin konnte die Folie sehr gut, d.h. abrissfrei, hergestellt werden und zeigte außerdem das gewünschte Verarbeitungsverhalten.

Beispiel 2

Im Vergleich zu Beispiel 1 wird jetzt eine dreischichtige Folie mit ABC-Aufbau hergestellt. Dazu wurden des weiteren Chips aus Polyethylenterephthalat und einem Füller dem Extruder (Zweischneckenextruder) für die Deckschicht (C) zugeführt. Durch Koextrusion und anschließende stufenweise Orientierung in Längs- und in Querrichtung wurde eine transparente, dreischichtige Folie mit ABC-Aufbau mit einer Gesamtdicke von 12 µm hergestellt. Die Dicke der Deckschicht (A) betrug 2,0 µm, und die Dicke der Deckschicht (C) betrug 1,0 µm.

| Deckschicht (A): | |
| --- | --- |
| 50 Gew.-% | Polyethylenterephthalat 4023 der Fa. KoSa mit einem SV-Wert von 800 |
| 50 Gew.-% | Poly(m-xylol-adipinamid) (MXD6) der Fa. Mitsubishi Gas Chemical Co., Produktname Nylon MXD6 6001, mit einer Schmelzviskosität von 1400 Poise. |

| Basisschicht (B): | |
| --- | --- |
| 100 Gew.-% | Polyethylenterephthalat 4023 der Fa. KoSa mit einem SV-Wert von 800 |

| Deckschicht (C): | |
| --- | --- |
| 100 Gew.-% | Polyesterrohstoff mit einem SV-Wert von 800, bestehend aus 99 Gew.-% Polyethylenterephthalat 4023 der Fa. KoSa und 1,0 Gew.-% Kieselsäurepartikel (Sylysia 320 von der Fa. Fuji/Japan) mit einem $d_{50}$-Wert von 2,5 µm |

Die Herstellungsbedingungen in den einzelnen Verfahrensschritten waren ähnlich zu denjenigen wie in Beispiel 1. Die Oberfläche der Deckschicht (C) hatte den geforderten hohen Glanz, die Folie die geforderte niedrige Trübung und die geforderte niedrige OTR. Weiterhin konnte die Folie sehr gut, d.h. abrissfrei, hergestellt werden und zeigte außerdem das gewünschte Verarbeitungsverhalten.

Beispiel 3

Es wurde eine Folie entsprechend dem Beispiel 2 hergestellt. In diesem Fall enthielt auch die Basisschicht (B) Poly(m-xylol-adipinamid) (MXD6). Der entsprechende Anteil von Poly(m-xylol-adipinamid) (MXD6) in der Basisschicht betrug 10 Gew.-%. Die OTR der Folie und die Haftung zwischen den Schichten (A) und (B) konnten dadurch weiter verbessert werden.

Vergleichsbeispiel VB1

Es wurde eine Folie entsprechend Beispiel 1 der JP 2001-347592 hergestellt. Die Rauigkeitswerte dieser Folie sind zu hoch und der Glanz der Folie liegt nicht im erfindungsgemäßen Bereich.
Die Eigenschaften und der Aufbau der gemäß den Beispielen und den Vergleichsbeispielen hergestellten Folien sind in Tabelle 2 zusammengestellt.

Tabelle 2

| Bei-spiele | Folien-dicke | Folien-aufbau | Dicke der Deck-schicht A | Poly(m-xylol-adipinamid) (MXD6) Anteil in Deckschicht A | Poly(m-xylol-adipinamid) (MXD6) Anteil in Basisschicht B | Glanz der Oberfläche (A, B oder C) Einstrahl-winkel 20° | Rauigkeit $R_a$ der Ober-fläche (A, B oder C) | Planare Orien-tierung $\Delta p$ | OTR | Haftung zwischen den Schich-ten A und B | Trü-bung der Folie |
|---|---|---|---|---|---|---|---|---|---|---|---|
| | µm | | µm | Gew.-% | Gew.-% | | µm | - | cm³/m² ·bar·d | N/25 mm | % |
| Bei-spiel 1 | 12 | AB | 2,0 | 50 | 0 | Glanz der Oberfläche B = 130 | Rauigkeit der Oberfläche B = 70 | 0,154 | 40 | 1,0 | 8 |
| Bei-spiel 2 | 12 | ABC | 2,0 | 50 | 0 | Glanz der Oberfläche C = 170 | Rauigkeit der Oberfläche C = 50 | 0,154 | 40 | 1,0 | 5 |
| Bei-spiel 3 | 12 | ABC | 2,0 | 50 | 10 | Glanz der Oberfläche C = 170 | Rauigkeit der Oberfläche C = 50 | 0,154 | 20 | 1,8 | 6 |
| VB 1 | 12 | B | | | 20 | 65 | 170 | | 22 | | 8 |

**Patentansprüche**

1. Polyesterfolie, die eine Basisschicht (B) und mindestens eine Deckschicht (A) aufweist, **dadurch gekennzeichnet, dass** die Deckschicht (A) Poly(m-xyloladipinamid) enthält.

2. Polyesterfolie nach Anspruch 1, **dadurch gekennzeichnet, dass** die Deckschicht (A) 5 bis 100 Gew.-% Poly(m-xylol-adipinamid) enthält, bezogen auf das Gewicht der Deckschicht (A).

3. Polyesterfolie nach Anspruch 1 oder 2, **dadurch gekennzeichnet, dass** neben der Deckschicht (A) auch die Basisschicht (B) Poly(m-xylol-adipinamid) enthält.

4. Polyesterfolie nach einem oder mehreren der Ansprüche 1 bis 3, **dadurch gekennzeichnet, dass** die Basisschicht (B) 0 bis 30 Gew.-% Poly(m-xylol-adipinamid) enthält, bezogen auf das Gewicht der Basisschicht (B).

5. Polyesterfolie nach einem oder mehreren der Ansprüche 1 bis 4, **dadurch gekennzeichnet, dass** die Schmelzviskosität des Poly(m-xylol-adipinamid) kleiner als 2000 Poise ist.

6. Polyesterfolie nach einem oder mehreren der Ansprüche 1 bis 5, **dadurch gekennzeichnet, dass** die Basisschicht (B) thermoplastischen Polyester, bevorzugt zu mindestens 60 Gew.-%, enthält.

7. Polyesterfolie nach einem oder mehreren der Ansprüche 1 bis 6, **dadurch gekennzeichnet, dass** der thermoplastische Polyester der Basisschicht (B) Ethlenglykol- und Terephthalsäure- und/oder Ethylenglykol- und Naphthalin-2,6-dicarbonsäure-Einheiten aufweist.

8. Polyesterfolie nach einem oder mehreren der Ansprüche 1 bis 7, **dadurch gekennzeichnet, dass** der Polyester der Basisschicht (B) Isophthalsäure-, Terephthalsäure- und Ethylenglykol-Einheiten aufweist.

9. Polyesterfolie nach einem oder mehreren der Ansprüche 1 bis 8, **dadurch gekennzeichnet, dass** als Polyester der Basisschicht (B) Polyethylenterephthalat verwendet wird.

10. Polyesterfolie nach einem oder mehreren der Ansprüche 1 bis 9, **dadurch gekennzeichnet, dass** die Folie einen A-B-C-Schichtaufbau aufweist, wobei A und C Deckschichten sind, die gleich oder verschieden sein können.

11. Polyesterfolie nach einem oder mehreren der Ansprüche 1 bis 10, **dadurch gekennzeichnet, dass** die Deckschichten den für die Basisschicht (B) verwendeten Polyester enthalten.

12. Polyesterfolie nach einem oder mehreren der Ansprüche 1 bis 11, **dadurch gekennzeichnet, dass** zumindest eine Folienoberfläche einen Glanz von größer als 100 aufweist.

13. Polyesterfolie nach einem oder mehreren der Ansprüche 1 bis 12, **dadurch gekennzeichnet, dass** die Folie eine Sauerstoffdurchlässigkeit (OTR) von kleiner als 50 $cm^3 \cdot m^{-2} \cdot d^{-1} \cdot bar^{-1}$ aufweist.

14. Polyesterfolie nach einem oder mehreren der Ansprüche 1 bis 13, **dadurch gekennzeichnet, dass** die Folie eine Trübung von kleiner als 20 % aufweist.

15. Verfahren zur Herstellung einer Polyesterfolie nach einem oder mehreren der Ansprüche 1 bis 14 umfassend die Schritte

   a) Herstellen einer mehrschichtigen Folie durch Koextrusion und Ausformen der Schmelzen zu flachen Schmelzefilmen
   b) biaxiales Strecken der Folie und
   c) Thermofixieren der gestreckten Folie

16. Verwendung einer Polyesterfolie nach einem oder mehreren der Ansprüche 1 bis 14 als Verpackungsmaterial, insbesondere für Nahrungs- und Genussmittel.

| | Europäisches Patentamt | **EUROPÄISCHER RECHERCHENBERICHT** | Nummer der Anmeldung |
|---|---|---|---|
| | | | EP 04 00 0703 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DATABASE WPI<br>Section Ch, Week 198401<br>Derwent Publications Ltd., London, GB;<br>Class A23, AN 1984-002155<br>XP002276539<br>& JP 58 197050 A (TOYOBO KK)<br>16. November 1983 (1983-11-16)<br>* Zusammenfassung *<br>----- | 1-16 | B32B27/34 |
| X | WO 01/92011 A (CRYOVAC INC ; HOFMEISTER FRANK M (US); KENNEDY THOMAS D (US); SATTERWH) 6. Dezember 2001 (2001-12-06)<br>* Ansprüche 1,4,17 *<br>* Seite 1, Zeile 4 - Zeile 8 *<br>* Seite 4, Zeile 26 - Seite 5, Zeile 14 *<br>* Seite 8, Zeile 5 - Zeile 17 *<br>----- | 1-16 | |
| X | EP 0 540 293 A (IDEMITSU PETROCHEMICAL CO) 5. Mai 1993 (1993-05-05)<br>* Ansprüche 1,3,9,12 *<br>* Seite 3, Zeile 52 - Seite 4, Zeile 22 *<br>----- | 1-16 | |
| A | WO 02/38673 A (PILLAGE KEITH R ; SHARE PAUL E (US); VALSPAR CORP (US))<br>16. Mai 2002 (2002-05-16)<br>* Ansprüche 1-6,12-17,22-25,32-34 *<br>* Seite 3, Zeile 9 - Zeile 21 *<br>* Seite 4, Zeile 1 - Zeile 7 *<br>* Seite 6, Zeile 12 - Zeile 30 *<br>* Seite 9, Zeile 15 - Zeile 26 *<br>* Seite 10, Zeile 1 - Seite 12, Zeile 5 *<br>-----<br>-/-- | 1-16 | RECHERCHIERTE SACHGEBIETE (Int.Cl.7)<br><br>B32B |

Der vorliegende Recherchenbericht wurde für alle Patentansprüche erstellt

| Recherchenort | Abschlußdatum der Recherche | Prüfer |
|---|---|---|
| Den Haag | 8. April 2004 | Girard, S |

EPO FORM 1503 03.82 (P04C03)

**Europäisches Patentamt**

# EUROPÄISCHER RECHERCHENBERICHT

Nummer der Anmeldung

EP 04 00 0703

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 5 695 839 A (YAMADA KAZUKI ET AL) 9. Dezember 1997 (1997-12-09) <br> * Ansprüche 1,9 * <br> * Spalte 5, Zeile 21 - Zeile 38 * <br> * Spalte 6, Zeile 17 - Zeile 63 * <br> * Spalte 7, Zeile 12 - Zeile 46 * <br> * Spalte 8, Zeile 9 - Zeile 30 * <br> * Beispiel 1; Tabelle 1 * <br> ----- | 1-16 | |
| A | DATABASE WPI <br> Section Ch, Week 200123 <br> Derwent Publications Ltd., London, GB; <br> Class A23, AN 2001-220680 <br> XP002276540 <br> & JP 2001 002800 A (UNITIKA LTD) <br> 9. Januar 2001 (2001-01-09) <br> * Zusammenfassung * <br> ----- | 1-16 | |

**RECHERCHIERTE SACHGEBIETE (Int.Cl.7)**

Der vorliegende Recherchenbericht wurde für alle Patentansprüche erstellt

| Recherchenort | Abschlußdatum der Recherche | Prüfer |
|---|---|---|
| Den Haag | 8. April 2004 | Girard, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 04 00 0703

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-04-2004

| Im Recherchenbericht angeführtes Patentdokument | | Datum der Veröffentlichung | Mitglied(er) der Patentfamilie | | Datum der Veröffentlichung |
|---|---|---|---|---|---|
| JP 58197050 | A | 16-11-1983 | JP | 1601819 C | 27-02-1991 |
| | | | JP | 2027942 B | 20-06-1990 |
| WO 0192011 | A | 06-12-2001 | US | 6379812 B1 | 30-04-2002 |
| | | | AU | 6467501 A | 11-12-2001 |
| | | | BR | 0111184 A | 10-06-2003 |
| | | | CA | 2413811 A1 | 06-12-2001 |
| | | | CN | 1431955 T | 23-07-2003 |
| | | | EP | 1289757 A1 | 12-03-2003 |
| | | | WO | 0192011 A1 | 06-12-2001 |
| EP 0540293 | A | 05-05-1993 | AU | 2734992 A | 29-04-1993 |
| | | | AU | 684222 B2 | 04-12-1997 |
| | | | AU | 3299795 A | 29-02-1996 |
| | | | AU | 695911 B2 | 27-08-1998 |
| | | | AU | 3830597 A | 18-12-1997 |
| | | | CA | 2081536 A1 | 29-04-1993 |
| | | | DE | 69212429 D1 | 29-08-1996 |
| | | | DE | 69212429 T2 | 13-02-1997 |
| | | | DE | 69229605 D1 | 19-08-1999 |
| | | | DE | 69229605 T2 | 16-12-1999 |
| | | | DE | 69231163 D1 | 13-07-2000 |
| | | | DE | 69231163 T2 | 16-11-2000 |
| | | | DK | 540293 T3 | 09-12-1996 |
| | | | DK | 676438 T3 | 07-02-2000 |
| | | | EP | 0540293 A1 | 05-05-1993 |
| | | | EP | 0676438 A1 | 11-10-1995 |
| | | | EP | 0675154 A1 | 04-10-1995 |
| | | | ES | 2092058 T3 | 16-11-1996 |
| | | | JP | 10272690 A | 13-10-1998 |
| | | | JP | 2842972 B2 | 06-01-1999 |
| | | | JP | 5220837 A | 31-08-1993 |
| | | | KR | 128516 B1 | 04-04-1998 |
| | | | US | 5925305 A | 20-07-1999 |
| | | | US | 5541011 A | 30-07-1996 |
| | | | JP | 2845684 B2 | 13-01-1999 |
| | | | JP | 5200958 A | 10-08-1993 |
| WO 0238673 | A | 16-05-2002 | AU | 2002402 A | 21-05-2002 |
| | | | AU | 2586602 A | 21-05-2002 |
| | | | BR | 0115231 A | 14-10-2003 |
| | | | CA | 2429033 A1 | 16-05-2002 |
| | | | CA | 2436826 A1 | 16-05-2002 |
| | | | EP | 1339796 A2 | 03-09-2003 |
| | | | EP | 1348006 A2 | 01-10-2003 |
| | | | WO | 0238673 A2 | 16-05-2002 |

Für nähere Einzelheiten zu diesem Anhang : siehe Amtsblatt des Europäischen Patentamts, Nr.12/82

**ANHANG ZUM EUROPÄISCHEN RECHERCHENBERICHT
ÜBER DIE EUROPÄISCHE PATENTANMELDUNG NR.**                    EP 04 00 0703

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-04-2004

| Im Recherchenbericht angeführtes Patentdokument | Datum der Veröffentlichung | Mitglied(er) der Patentfamilie | Datum der Veröffentlichung |
|---|---|---|---|
| WO 0238673 A | | WO 0238674 A2 | 16-05-2002 |
| | | US 2003039779 A1 | 27-02-2003 |
| US 5695839 A | 09-12-1997 | JP 3007408 B2 | 07-02-2000 |
| | | JP 4179543 A | 26-06-1992 |
| | | JP 3035016 B2 | 17-04-2000 |
| | | JP 5051033 A | 02-03-1993 |
| | | JP 5051034 A | 02-03-1993 |
| | | JP 5051035 A | 02-03-1993 |
| | | JP 5050562 A | 02-03-1993 |
| | | JP 5050563 A | 02-03-1993 |
| | | JP 5050564 A | 02-03-1993 |
| | | US 2003148124 A1 | 07-08-2003 |
| | | US 6579580 B1 | 17-06-2003 |
| | | US 2004051198 A1 | 18-03-2004 |
| | | US 2001051239 A1 | 13-12-2001 |
| | | US 6010759 A | 04-01-2000 |
| | | US 5433982 A | 18-07-1995 |
| JP 2001002800 A | 09-01-2001 | KEINE | |

EPO FORM P0461

Für nähere Einzelheiten zu diesem Anhang : siehe Amtsblatt des Europäischen Patentamts, Nr.12/82